# EUROPEAN PATENT APPLICATION

(11) **EP 4 711 565 A1**
(43) Date of publication of application: **18.03.2026**
(21) Application number: 24306534.9
(22) Date of filing: 17.09.2024
(51) Int. Cl.: E05B 77/44, E05B 83/42, E05C 19/14

(54) **SAFETY LOCK FOR DOOR PANEL**

(71) Applicant: Volvo Truck Corporation, 405 08 Göteborg (SE)
(72) Inventor: MORFINO, Anna, 69150 Decines Charpieu (FR); BERTHILIER, Frederic, 69140 Rillieux la Pape (FR); GALLARDO, Alvaro, 11130 Chiclana de la Frontera (ES); WALLANDER, Fredrik, 43543 Pixbo (SE)
(74) Representative: Germain Maureau

(57) **Abstract**

The invention relates to an internal latch (44) for internally latching a door (22) of a vehicle (10) with respect to a cabin abutment member (38) of the vehicle, comprising:
- a base (50) which is configured for attachment to an internal side of the door (22);
- a clasp assembly (52) comprising a clasp (54), where the clasp (54) exhibits, with respect to the base (50), a storage position and a latching position, and where the clasp assembly (52) is attached to the base (50) by a deployment linkage (56) allowing the clasp assembly (52) to deploy from a retracted position, when the clasp (54) is in the storage position, to a deployed position, when the clasp (54) is in the latching position, according to a deployment movement;
wherein the base (50), the clasp assembly (52) and the deployment linkage (56) form an articulated polygon.

## Description

### TECHNICAL FIELD

The disclosure relates generally to systems for latching a door of a vehicle in a closed position. In particular aspects, the disclosure relates to an internal latch for internally latching a door of a vehicle with respect to a cabin abutment member of the vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Industrial vehicles can be used to carry freight between places located far from each other. As a consequence, the driver of such a vehicle can spend several days on the road and may sleep in the vehicle cabin.

For security reasons, the driver generally locks the cabin door during the night. Such locking may for example be performed using the conventional remotely controlled locking/unlocking system of the cabin. However, 100% secure lock systems cannot be guaranteed, and there is always the risk, or the perceived risk, that the locking system may be disabled from the outside. For example, the driver may fear that a malicious person may use an electronic device capable of generating a signal having the same frequency as the remote control of the locking / unlocking system. As a consequence, the driver may fear that a person can open the door of the cabin even if it has been locked, and can attack or rob the driver while he is sleeping.

In order to improve the security conditions for the driver, especially to improve the perceived security, some vehicle cabins are equipped with an additional latching device which is located internally to the cabin and therefore cannot be deactivated from the outside. Such latching systems may be purely mechanical, further mooting any perception of vulnerability associated with electronic devices. Nevertheless, such additional latching systems, especially additional mechanical latching systems, require specific arrangements both on the cabin body and on the door. Some latching systems are quite bulky and intrusive. Some latching systems are excessively demanding in terms of the constraints they impose regarding the design of the door and/or of the cabin structure. Some latching systems may be insufficiently user-friendly, and/or may not convey enough perception of security to the user. It therefore appears that there is room for improvement in latching systems for the cabin doors, along at least one of these dimension.

### SUMMARY

According to a first aspect of the disclosure, it is disclosed an internal latch for internally latching a door of a vehicle with respect to a cabin abutment member of the vehicle, comprising:
- a base which is configured for attachment to an internal side of the door;
- a clasp assembly comprising a clasp, where the clasp exhibits, with respect to the base, a storage position and a latching position, and where the clasp assembly is attached to the base by a deployment linkage allowing the clasp assembly to deploy from a retracted position, when the clasp is in the storage position, to a deployed position, when the clasp is in the latching position, according to a deployment movement;
wherein the base, the clasp assembly and the deployment linkage form an articulated polygon. The first aspect of the disclosure may seek to provide a robust latch. A technical benefit may include the latch being less intrusive into the cabin space in the retracted position of the clasp.

Optionally in some examples, including in at least one preferred example, the deployment linkage may comprise a deployment rod which is articulated on the base around a first axis, and articulated on the clasp assembly around a second axis. The deployment linkage may further comprise an orientation control link which is articulated on the base around a third axis, and articulated on the clasp assembly around a fourth axis. The first, second, third and fourth axis may be parallel and distinct. A technical benefit may include a well-controlled deployment movement of the clasp assembly and may include a well-defined end position of the clasp ensuring reliable latching.

Optionally in some examples, including in at least one preferred example, in an intermediate outer position of the clasp assembly between its retracted and its deployed positions, the second axis may be further away from a base plane containing the first and third axis than in the retracted and in the deployed positions of the clasp assembly. A technical benefit may include making sure the clasp being able, in the deployment movement, being able to clear the cabin abutment member to achieve secure hooking of the clasp on the cabin abutment member.

Optionally in some examples, including in at least one preferred example, the first, second, third and fourth axis may be perpendicular to a door opening direction. A technical benefit may include an effective geometry of the deployment linkage, providing an advantageous trajectory of the clasp assembly during the deployment movement.

Optionally in some examples, including in at least one preferred example, the clasp assembly may further comprise a clasp carrier. The deployment rod may be articulated on the clasp carrier around the second axis. The orientation control link may be articulated on the clasp carrier around the fourth axis. The clasp may be connected to the clasp carrier by a slide which allows a movement of the clasp with respect to clasp carrier from a shortened position to an extended position along a slide direction perpendicular to the second axis. A technical benefit may include further reach of the clasp in the extended position, and/or provide compactness of the latch assembly in the stored position.

Optionally in some examples, including in at least one preferred example, the slide direction may be perpendicular to a door opening movement of the door when it leaves its closed position towards its open position. A technical benefit may include increased resistance of the clasp assembly to any door opening movement.

Optionally in some examples, including in at least one preferred example, the orientation control link may be rigid and the distance between the third and the fourth axis may be constant. A technical benefit may include providing a sturdy, compact and fairly simple latch.

Optionally in some examples, including in at least one preferred example, the base, the clasp assembly and the deployment linkage form an articulated parallelogram or quasi parallelogram. A technical benefit may include an effective geometry of the deployment linkage, providing an advantageous trajectory of the clasp assembly during the deployment movement where the clasp assembly maintains a constant or quasi constant orientation with respect to the base during the deployment movement.

Optionally in some examples, including in at least one preferred example, the orientation control link may have a collapsed configuration and a stretched configuration, wherein the distance between the third and the fourth axis is greater when the orientation control link is in its stretched configuration than when it is in its collapsed configuration. A technical benefit may include providing for an advantageous trajectory of the clasp assembly during the deployment movement, where the clasp may exhibit a whipping movement providing extra ability to the clasp for clearing the cabin abutment member and for secure hooking on the cabin abutment member.

Optionally in some examples, including in at least one preferred example, the internal latch may be configured such that the orientation control link switches to its stretched configuration during or after a terminal phase of the deployment movement of the clasp assembly towards its deployed position. A technical benefit may include achieving a final gripping movement of the clasp on the cabin abutment member.

Optionally in some examples, including in at least one preferred example, the orientation control link may comprise two control rods including a first control rod articulated on the base around the third axis, and including a second control rod articulated on the clasp assembly around the fourth axis, wherein the two control rods are mutually articulated one to the other around a fifth axis which is parallel to the third and fourth axis. A technical benefit may include providing a sturdy, simple and reliable variable geometry orientation control link.

Optionally in some examples, including in at least one preferred example, the configuration of the orientation control link may be controlled by the deployment movement via a cam. A technical benefit may include achieving a precise and well defined movement of the clasp.

Optionally in some examples, including in at least one preferred example, the cam may comprise a cam track and a cam follower, where one of the cam track and of the cam follower is arranged on the clasp assembly and where the other of the of cam track and of the cam follower is arranged on the first control rod. A technical benefit may include providing a simple and reliable cam.

Optionally in some examples, including in at least one preferred example, the clasp assembly may be biased in a bistable manner by a spring, either towards the retracted or towards the deployed position from any position in-between, depending on the position of the clasp assembly with respect to an intermediate switchover position between the retracted and the deployed positions. A technical benefit may include a stable position of the clasp assembly in both of the retracted and the deployed positions.

Optionally in some examples, including in at least one preferred example, the clasp assembly may be biased towards the base. A technical benefit may include increased compactness of the latch in at least one of the retracted or deployed positions.

Optionally in some examples, including in at least one preferred example, the base may have an outer side for attachment to an internal side of the door, and the clasp assembly and the deployment linkage may be arranged on an inner side of the base, opposite to its outer side. A technical benefit may include easy and secure attachment of the latch on the door.

According to a second aspect of the disclosure, it is disclosed a vehicle comprising the internal latch having any of the preceding features. The second aspect of the disclosure may seek to provide a vehicle having increased security at a low cost. A technical benefit may include minimal intrusion of the latch in the storage position.

Optionally in some examples, including in at least one preferred example, the vehicle may comprise a cabin having a cabin body and a door mounted on the cabin body, the door being moveable with respect to the cabin body along a door opening movement from a closed position to an open position, and the internal latch may be mounted on the door for latching the door in its closed position with respect to the cabin.

Optionally in some examples, including in at least one preferred example, the cabin body may comprise a cabin abutment member which is rigid with the cabin body, and the clasp, in its the latching position, may engage the cabin abutment member to latch the door in its closed position with respect to the cabin.

Optionally in some examples, including in at least one preferred example, the cabin abutment member may be located in an internal volume of the cabin when the door is closed.

Optionally in some examples, including in at least one preferred example, the cabin abutment member may be a grab handle arranged in the internal volume of the cabin in the vicinity of the door. By using an existing grab handle, which has already another function, a low cost can be obtained.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary view of a vehicle according to an example, having a cabin and a door, the door being in a closed position.
**FIG. 2** is an exemplary view of the vehicle of Fig. 1, the door being in an open position.
**FIG. 3** is a schematic perspective view partially showing a part of a door having an internal latch, and of a grab handle, viewed from inside the passenger compartment.
**FIG. 4** is a schematic perspective view showing an internal latch and a grab handle.
**FIG. 5** to **Fig. 8** are schematic views of the latching of a door with an internal latch according to an example, the internal latch being shown in different configurations.
**FIG. 9** is a schematic partial perspective view showing a part of another example of an internal latch.
**FIG. 10** and **Fig. 11** are schematic views of the latching of a door with an internal latch according to still another example, the internal latch being shown in a retracted configuration and in a latching configuration.
**FIG. 12** to **Fig. 14** are schematic views of the latching of a door with an internal latch according to a further example, the internal latch being shown in different configurations.
**FIG. 15** is an exploded perspective view of the internal latch of Fig. 12.
**FIG. 16** is a schematic sectional view of the internal latch of Fig. 12.
**FIG. 17** to **Fig. 20** are schematic perspective views of an internal latch according to still a further example, the internal latch being shown in different configurations.
**FIG. 21** is a schematic side view showing a part of another example of an internal latch.
**FIG. 22** is a perspective view of the internal latch of Fig. 21.
**FIG. 23** is an exploded perspective view of the internal latch of Fig. 21.

### DETAILED DESCRIPTION

The detailed description set forth below provides information and examples of the disclosed technology with sufficient detail to enable those skilled in the art to practice the disclosure.

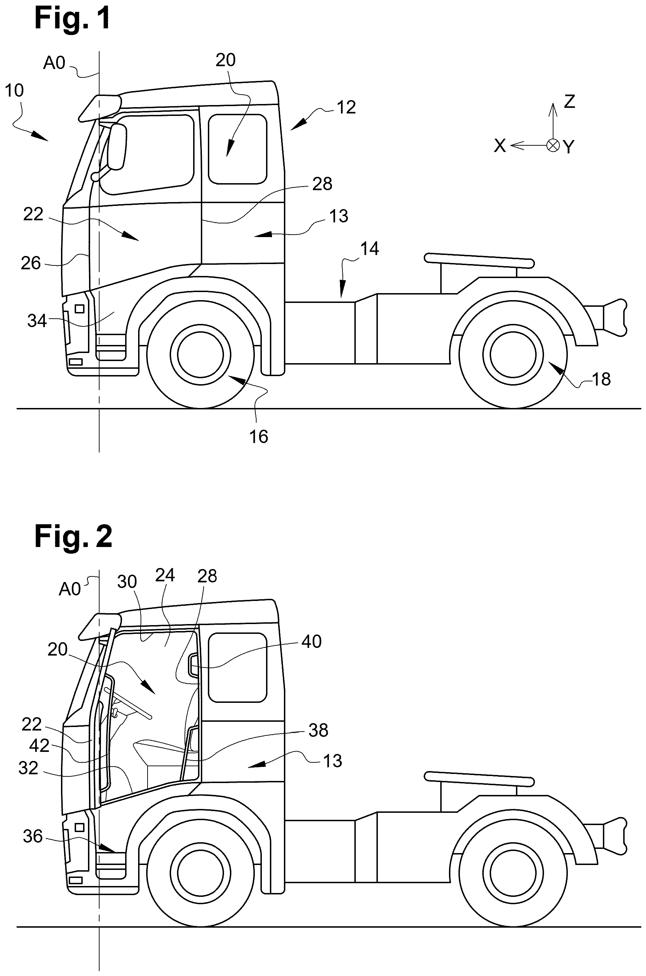

Figures 1 and 2 both show an automotive vehicle 10 which comprises a cabin 12 mounted on a chassis comprising a frame 14 supported by front wheels 16 and rear wheels 18. The vehicle illustrated is a truck, for example a semitrailer truck, but the disclosure can also apply to other heavy-duty vehicles, in particular industrial vehicles, such as buses or construction equipment. Z is defined as the vertical direction, X is defined as the longitudinal direction of the vehicle 10, and Y is defined as the lateral direction of the vehicle 10. The cabin 12 comprises a cabin body 13 which delimits an internal volume which forms a passenger compartment 20.

The cabin 12 further comprises a door 22 which is movable with the respect to the cabin body 13, along a door opening movement, from a closed position illustrated in Figure 1 to an open position illustrated in Figure 2. In the open position of Figure 2, the door allows access to and from the passenger compartment 20 through a door opening 24 of the cabin body 13. In the example, the door opening movement of the door 22 is a rotation around a door rotation axis A0 which is substantially vertical.

Conventionally, the door rotation axis A0 may be located, as shown, at a forward vertical edge 26 of the door opening 24. Opposite to the door rotation axis A0 along the longitudinal direction X, the door opening 24 exhibits a rear vertical edge 28. The door opening 24 further exhibits a top edge 30, which extends substantially along the longitudinal direction X, and a lower edge 32, at the level of floor of the cabin 12, extending also essentially along the longitudinal direction X. In some examples, especially in a case of a cab-over-engine type of cabin 12 as in the example shown, the door 22 may comprise a lower panel 34 extending downwards below the lower edge 32 of the door opening 24, for example for covering at least partially one or several steps of an access staircase 36 to the passenger compartment 20.

In the example shown on Figure 2, the cabin 12 comprises one or several grab handles 38, 40, 42 which are rigidly affixed to the cabin body 13. The grab handles 38, 40, 42 are located so as to be near an edge of the door opening 24, preferably protruding inwardly towards the centre of the door opening 24 so as to be easily accessible by the driver or the passenger of the vehicle to provide some grasping point to ease the entry and exit to and from the passenger compartment 20. When the door 22 is closed, the grab handles 38, 40, 42 are arranged in the internal volume of the cabin, i.e. in the passenger compartment 20, in the vicinity of the door opening 24.

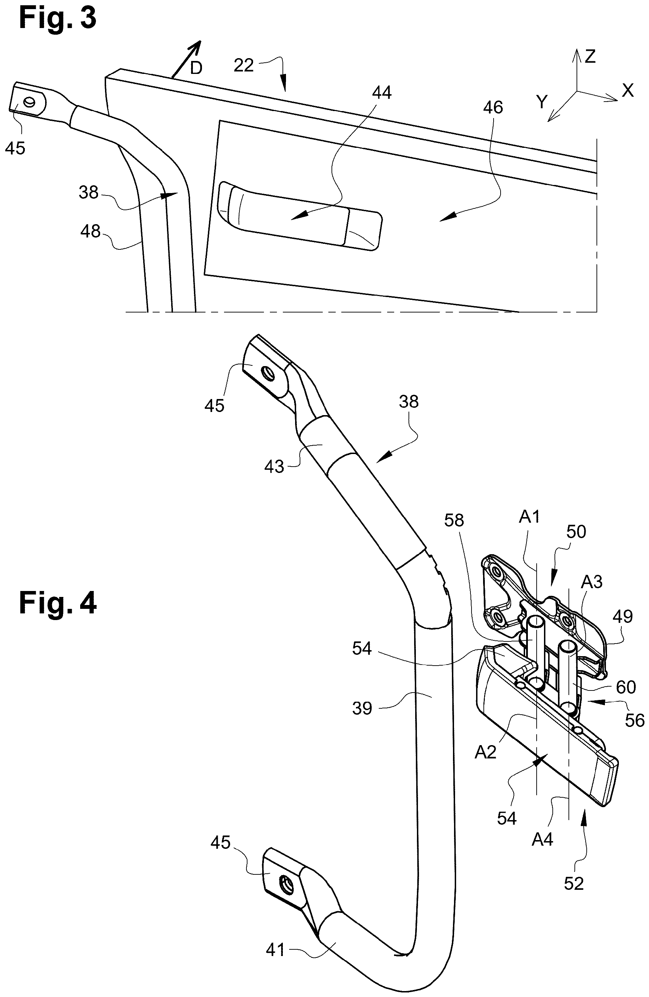

According to an aspect of the disclosure, and as shown in Figures 3 and 4, the vehicle comprises an internal latch 44 for internally latching the door 22 of the vehicle 10 with respect to a cabin abutment member of the vehicle. In the example, the cabin abutment member may be one of the above mentioned grab handles 38, 40, 42. More particularly, as one possible example, the cabin abutment member is a grab handle 38 which extends along a lower portion of the rear vertical edge 28 of the door opening 24. More generally, the cabin abutment member can be a part of the cabin body or rigidly attached to a cabin body 13, which exhibits an abutment surface for the internal latch 44. The abutment member can be in the shape of a panel, of a bar, of a beam, of a recess, etc..., part of the cabin body 13 or rigidly connected to the cabin body 13, preferably located near an edge of the door opening 24.

Figures 3 is a schematic partial view showing, from the inside of the passenger compartment 20, looking towards the door 22, a lower portion of the door 22, especially an interior door trim panel 46 which extends to a rear edge 48 of the door 20 corresponding to the above-mentioned rear vertical edge 28 of the door opening 24.

The internal latch 44 is mounted on the door 22, on an internal side thereof, for latching the door 22 in its closed position with respect to the cabin body 13. In the shown example, the internal latch 44 is at least in part integrated into the interior door trim panel 46, for example by being at least partly received within a recess of the interior door trim panel 46. The internal latch 44 is configured to cooperate with a cabin abutment member, here the grab handle 38, to achieve the latching function. The cabin abutment member, here the grab handle 38, is rigidly fixed to the cabin body 13 and is, in itself, rigid. More particularly, in this particular example, the internal latch 44 is configured to cooperate with a vertical portion 39 of the grab handle which is in the form of a tubular portion extending substantially vertically in the vicinity of the rear vertical edge 28 of the door opening. On Figure 3 is represented schematically the door opening movement D wherein the rear vertical edge 28 of the door 22, and thus the internal latch 44 mounted on the door 22, exhibits a rotation movement away from the grab handle 38 when the door 22 is moved from its closed position towards its open position. In this example, the door opening movement is thus perpendicular or substantially perpendicular to the vertical portion 39 of the grab handle 38.

As visible on Figure 4, which is also a schematic partial view, from the inside of the passenger compartment, looking towards the door 22, the grab handle 38 is for example U-shaped, turned horizontally, with, at both ends of the vertical portion 39 forming the base of the U-shape, lower and upper branches 41, 43 of the U extending substantially horizontally and having each a free end 45 with attachment features for rigidly fixing the grab handle 38 to the cabin body 13, near the rear vertical edge 28 of the door opening 24.

As also visible on Figure 4, the internal latch 44 comprises a base 50 which is configured for attachment to an internal side of the door 22. For example, the base 50 can be screwed, riveted, glued or welded on a structural element of the door 22 such a s a door panel or a door reinforcement beam. As in the shown example, the base 50 may be in the shape of a plate extending in a plane generally parallel to a general plane of the door 22.

The internal latch 44 further comprises a clasp assembly 52 comprising a clasp 54, where the clasp 54 exhibits, with respect to the base 50, a storage position, shown on Figure 3 and 4, and a latching position which will be detailed hereinafter and in which the clasp 54 engages the cabin abutment member, here the grab handle 38, to latch on the door 22 in its closed position. The cabin abutment member of the cabin body 13 which is engaged by the clasp 54, for example the grab handle 38, is preferably rigid with the cabin body 13, so that the clasp 54, in its the latching position, may rigidly latch the door 22 in its closed position with respect to the cabin 12.

According to an aspect of this disclosure, the clasp assembly 52 is attached to the base 50 by a deployment linkage 56 allowing the clasp assembly 52 to deploy from a retracted position, when the clasp is in the storage position, to a deployed position, when the clasp is in the latching position, according to a deployment movement.

In some examples, including the example of Figure 4, the base 50 has an outer side 49 for attachment to an internal side of the door 22, and the clasp assembly 52 and the deployment linkage 56 are arranged on an inner side of the base, opposite to its outer side 49.

In the example, the base 50, the clasp assembly 52 and the deployment linkage 56 form an articulated polygon, the polygon having multiple sides articulated one to the other. Each side of the polygon is articulated at both of its extremities with respect to another respective side of the polygon, and the sides of the polygon are articulated one to the other so as to form a closed polygonal chain. Preferably, the articulated polygon is a simple polygon which does not intersect itself, i.e. where none of the sides crosses another side of the polygon.

The articulated polygon preferably has at least 4 distinct sides, the polygon having thus at least 4 articulations. In such an articulated polygon, the base 50 and the clasp assembly 52 form each one of two non-consecutive sides of the polygon, and are each connected one to the other by two independent parts of the polygon.

In some examples, including the example of Figure 4, the deployment linkage 56 comprises a deployment rod 58 which is articulated on the base 50 around a first axis A1, and articulated on the clasp assembly 52 around a second axis A2. The deployment linkage 56 further comprises an orientation control link 60 which is articulated on the base 50 around a third axis A3, and articulated on the clasp assembly 52 around a fourth axis A4. The first axis A1, the second axis A2, the third axis A3 and the fourth axis A4 are parallel and distinct. In some examples, for example where the internal latch 44 is arranged on the door 22 near a rear edge 48 thereof, and where the cabin abutment member engaged by the internal latch is the vertical portion 39 of the grab handle 38, the first axis A1, the second axis A2, the third axis A3 and the fourth axis A4 are preferably arranged parallel to the vertical orientation of the vertical portion 39 of the grab handle 38.

In the example, the articulated polygon, formed by the base 50, the clasp assembly 52 and the deployment linkage 56, extends parallel to a plane which is perpendicular to the first axis A1, the second axis A2, the third axis A3 and the fourth axis A4.

In some examples, including the example of Figure 4, the base 50, the clasp assembly 52, the deployment rod 58 and the orientation control link 60 each form one side of the polygon where the base 50 and the clasp assembly 52 form each one of two non-consecutive sides of the polygon, and are each connected one to the other by two independent parts of the polygon which are formed respectively by the deployment rod 58 and the orientation control link 60.

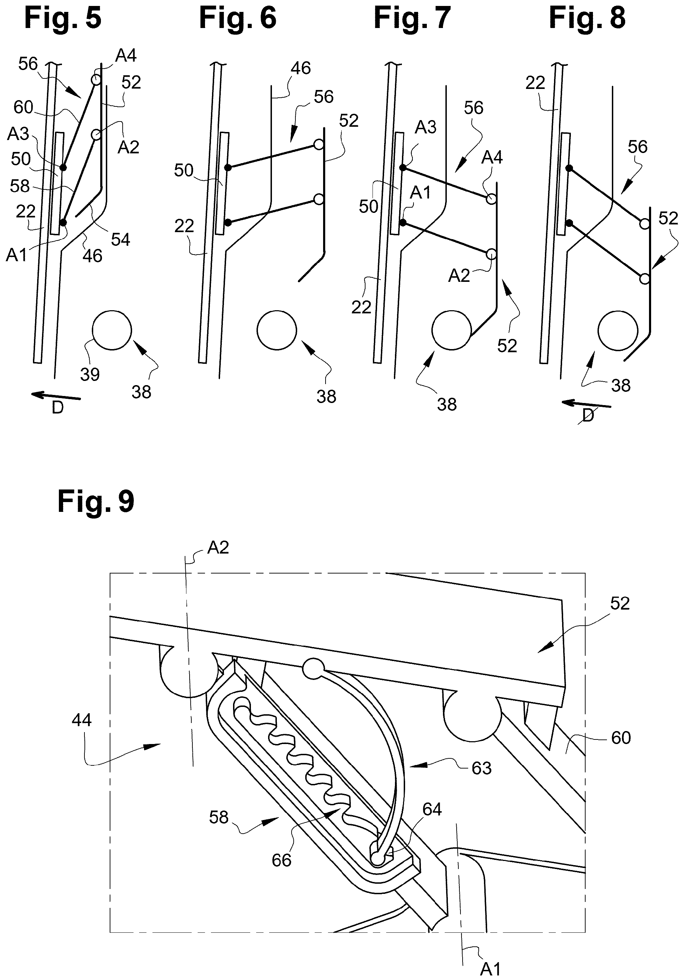

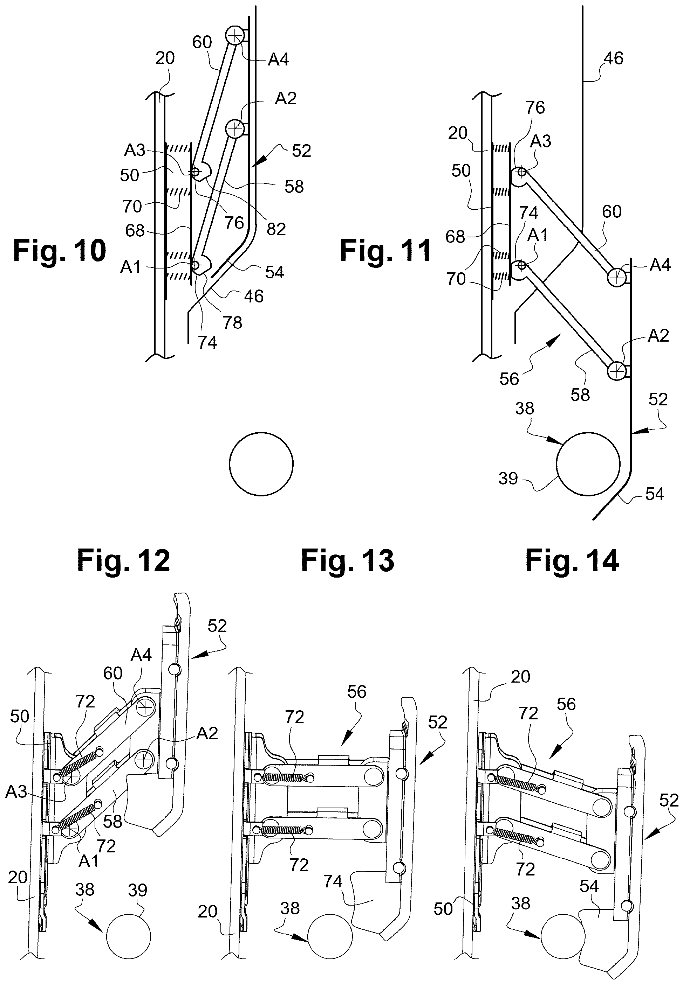

In some examples, including the examples of Figure 4, of Figures 5 to 8, of Figures 10 and 11, and of Figures 12 to 16, the orientation control link 60 is rigid such that the distance between the third axis A3 and the fourth axis A4 is constant, whatever the configuration of the internal latch 44, including whatever the position of the clasp assembly 52 with respect to the base 50.

In some examples, including the examples of Figure 4, of Figures 5 to 8, of Figures 10 and 11, and of Figures 12 to 16, the clasp assembly 52 and the deployment linkage 56 form, with the base 50, an articulated parallelogram or quasi parallelogram. In such case, the distance between the first axis A1 and the second axis A2, i.e. the effective length of the deployment rod 58, is equal or quasi-equal to the distance between the third axis A3 and the fourth axis A4, i.e. the effective length of the orientation controlling rod 60, the four axis being distinct and parallel one to the other. Similarly, the distance, on the base 50, between the first axis A1 and third axis A3, is equal or quasi-equal to the distance, on the clasp assembly 52, between the second axis A2 and the fourth axis A4. In such a case, the clasp assembly 52 remains parallel or quasi-parallel to the base 50, whatever the configuration of the internal latch 44, including whatever the position of the clasp assembly 52 with respect to the base 50 from the retracted position to the deployed position.

Figures 5 to 8 are each a schematic view of an internal latch 44 according to an example, represented with its clasp assembly 52 in different positions with respect to its base 50, and thus in different positions with respect to the door 22 and to the grab handle 38. In those Figures, the internal latch 44 is of the type shown in Figure 4, where the orientation controlling rod 60 is a rigid, and where the articulated polygon is an articulated parallelogram. In all of these Figures, the door 22 is represented in its closed position with respect to the cabin 13, thus with the respect to the grab handle 38.

In Figure 5, the internal latch 44 is in a configuration where the clasp assembly 52 is in the retracted position and the clasp 54 in its storage position. In such configuration, the clasp assembly 52 may not interfere with the cabin abutment member formed by the grab handle 38. In this example, in the retracted position, the clasp assembly 52 is integrated into a recess in a door trim panel 46 so as to be as flush as possible with the internal side of the door 22. In such position, the internal latch 44 does not interfere with the door opening movement D.

In Figure 8, the internal latch 44 is in a configuration where the clasp assembly 52 is in its deployed position and where the clasp 54 is in its latching position where it engages the cabin abutment member, here the grab handle 38, so as to avoid any movement of the door 22 with respect to the cabin body 13. In such a configuration, the door 22 is latched in its closed position, impeding the door opening movement D. Necessarily, in the deployed position of the clasp assembly 52, the clasp assembly 52 is closer to the cabin abutment member formed by the grab handle 38 than in its retracted position.

Figures 6 and 7 each show one of two different intermediate positions of the clasp assembly 52 of the internal latch 44, between the retracted position of Figure 5 and the deployed position of Figure 8. The deployment movement of the clasp assembly 52 occurs in a plane which is perpendicular to the first A1, second A2, third A3 and fourth axis A4 of the articulated polygon. In the examples, the deployment movement has a main component along a main orientation within said plane, the main orientation being in this example the longitudinal direction X of the vehicle. In the example, the clasp assembly 52 moves from front to rear along the main orientation of the deployment movement, from a retracted position away from the grab handle 38 to a deployed position where the clasp 54 can engage the grab handle 38. However, because the articulated polygon determines a movement of the clasp assembly 52 which is not a pure translation, nor a pure rotation, it can be seen that, in those intermediate positions, the clasp assembly 52 is displaced inwardly also along a transversal direction Y of the vehicle so that the clasp assembly 52, and the clasp 54, approach the cabin abutment member formed by the grab handle 38 from behind with the respect to the door opening movement. This allows to design the clasp 54 of the class assembly 52 as a hook portion which, when it is engaged with the cabin abutment member formed by the grab handle 38, in the latching position of the clasp 54, secures a solid engagement of the clasp with the cabin abutment member 38. This also provides a greater tolerance to the relative positioning of the internal latch 44 with respect to the cabin abutment member 38. In the first the intermediate position of Figure 6 and in the second intermediate position of Figure 7, the clasp assembly 52 is further away from the door 22, towards the interior of the cabin 12, than in its deployed position of Figure 8. As one can easily figure from those representations, there exists a further intermediate position of the clasp assembly 52, between the positions of Figure 6 and of Figure 7, which is hereinafter called an intermediate outer position of the clasp assembly 52, where the clasp assembly 52 is furthest away from the door 22 along a direction perpendicular to a general plane of the door 22, towards the interior of the cabin 12. In the intermediate outer position of the clasp assembly 52 between its retracted and its deployed positions, the second axis A2 is further away from a base plane containing the first axis A1 and third axis A3 than in the retracted and in the deployed positions of the clasp assembly 52. For example, the deployment rod 58 may, in the intermediate outer position of the clasp assembly 52, be perpendicular to the plane containing the first axis A1 and third axis A3.

It is to be noted that the orientation of the first, second, third and the fourth axis of the articulated polygon, and thus the main orientation of the deployment movement, will be adapted to the relative position of the internal latch 44 on the door 22 and of the cabin abutment member which the internal latch 44 engages to latch of the door in the closed position. For example, in a non-depicted embodiment, the internal latch 44 could be arranged on the door 22 near the top edge 30 or near the lower edge 32 of the door opening 24, in order to engage a corresponding cabin abutment member near the top edge 30 or near the lower edge of the door opening 24. In such case, the first A1, second A2, third A3, and fourth axis A4 of the articulated polygon could extend in a horizontal or substantially horizontal direction, for example parallel to the longitudinally direction X of the vehicle.

In some examples, including the example of Figure 9, the internal latch 44 may comprise a lock 63 for locking the clasp assembly 52 in its deployed position. The lock 63 may lock the articulated polygon in a deployed configuration corresponding to the deployed position of the clasp assembly 52. For example, the lock 63 may lock the relative position of two sides of the articulated polygon one with respect to the other. In the example shown on Figure 9, the lock 63 locks the relative position of the clasp assembly 52 with respect to the deployment rod 58. For example, the lock 63 may comprise a pawl 64 connected the to one side of the articulated polygon, such as the clasp assembly 52, and a ratchet 56 connected to another side of the articulated polygon, such as the deployment rod 58. The ratchet 66 exhibits several successive teeth, where the pawl 64 may engage the teeth to lock the clasp assembly 52 in its deployed position.

In some examples, including the example of Figures 10 and 11, and including the example of Figures 12 to 16, the clasp assembly 52 may be biased towards the base 50, for example by a spring.

In some examples, including the example of Figures 10 and 11, and including the example of Figures 12 to 16, the clasp assembly 52 may be biased in a bistable manner by a spring, either towards the retracted or towards the deployed position, from any position in-between, depending on the position of the clasp assembly with respect to an intermediate switchover position between the retracted and the deployed positions.

In the example Figures 10 and 11, the internal latch 44 comprises a spring plate 68 which extends parallel to the base 50 of the internal latch 44, on an internal side thereof, with one or several compression springs 70 extending perpendicularly to the spring plate 68 and to the base 50, in between the spring plate 68 and the base 50. The spring plate may move with respect to the base, along a direction perpendicular to the base, against the action of the compression springs 70. The deployment linkage 56 comprises at least one cam which, depending on the configuration of the deployment linkage between a retracted configuration, corresponding to the retracted position of the clasp assembly 52, and the deployed configuration, presses on the spring plate 68, against the action of the compression spring or springs 70. The cam is designed such that the clasp assembly 52 is biased in a bistable manner, either towards the retracted or towards the deployed position. In the example of Figures 10 and 11, the cam comprises a first cam portion 74, which is an eccentric cam extending around first axis A1 and which is unitary with the deployment rod 58. In that example, the cam further comprises a second cam portion 76, which is also an eccentric cam, which extends around the third axis A3, and which is unitary with the orientation control link 60. The cam is designed such that it forces the spring plate 68 to further compress the one or more compression springs 70 when going from the retracted configuration of the deployment linkage 56 to an intermediate switchover position, and also to further compress the one or more compression springs 70 when going from the deployed configuration of the deployment linkage 56 to the intermediate switchover position. In this example, each of the first cam portion 74 and of the second cam portion 76 comprises a flattened portion 78, 80 which lies against the spring plate 68 in the deployed configuration of the deployment linkage 56, to ensure a stable position of the clasp assembly 52 in its deployed position.

In the example of Figures 12 to 16, the internal latch 44 comprises at least one traction spring 72 extending between the base 50 and the deployment linkage 56 to bias the clasp assembly 52 in a bistable manner either towards the retracted or towards the deployed position of the clasp assembly 52. In the depicted example of Figures 12 to 16, the internal latch 44 comprises two traction springs 72 where one traction spring 72 has one end connected to the base 50 and the other end connected to the deployment rod 58, and where another traction spring 72 has one end connected to the base 50 and the other end connected to the orientation control link 60. Each traction spring 72 is maximally extended when the clasp assembly 52 is in the intermediate switchover position which is shown on Figure 13. For any position of the clasp assembly 52 on either side of this intermediate switchover position, the traction springs bias the clasp assembly 52 either towards the retracted position, as in the example of Figure 12, or towards the deployed position, as in the example of Figure 14.

In some examples, including the example of Figures 12 to 16, the clasp assembly 52 comprises a clasp 54 and a clasp carrier 82, where the clasp 54 can slide with respect to the clasp carrier 82. The deployment rod 58 is articulated on the clasp carrier 82 around the second axis A2. The orientation control link 60 is articulated on the clasp carrier 82 around the fourth axis A2. The clasp 54 is connected to the clasp carrier 82 by a slide 84 which allows a sliding movement of the clasp 54 with respect to clasp carrier 82 from a shortened position to an extended position along a slide direction perpendicular to the second axis A2. In the example, the slide 84 comprises a female dovetail section which engages a male dovetail section on the class carrier 82. In the example, the slide direction is parallel or substantially parallel to the main orientation of the deployment movement of the clasp assembly 52. The sliding movement of the clasp 54 with respect to the clasp carrier 82, from the shortened position to the extended position, serves to extend, along the main orientation of the deployment movement, the range of movement of the clasp 54 between its storage position and its latching position. In other words, the reach of the catch 54 towards its latching position is increased.

In the example, the slide direction is perpendicular to the door opening movement D of the door 22 when it leaves its closed position.

As in the example, the slide 84 may be attached to the clasp 54 by one or several anchoring pins 86, a given anchoring pin 86 being received in corresponding through-holes 88, 90 formed respectively in the slide 84 and in the clasp 54.

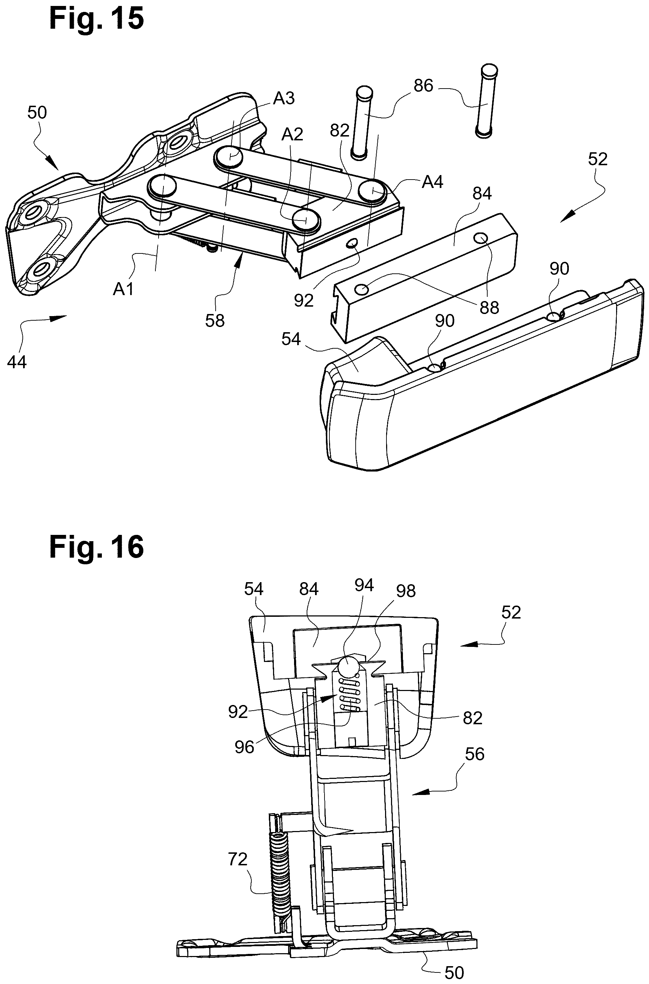

As shown more particularly on Figures 15 and 16, the clasp assembly 52 may comprise a resilient index 92 for indexing at least one relative position of the clasp 54 and its slide 84 with the respect to the clasp carrier 82. In Figure 16, the resilient index 92 comprises an indexing ball 94 which partly protrudes at an interface surface of the clasp carrier 82, said interface surface facing a corresponding interface surface of the slide 84. In the shown example, the indexing ball 94 is carried by the clasp carrier 82 and is biased by a spring 96 towards a protruding position in which it may engage at least one a recess 98 formed in the interface surface of the slide 84. Preferably, the resilient index 92 may index the clasp 54 both in its shortened position with respect to the clasp carrier 82 and in its extended position with respect to the clasp carrier 82.

In the various examples described above, the articulated polygon formed by the base 50, the clasp 52, and the deployment linkage 56 is a four sided polygon. In those examples, the deployment rod 58 and the orientation control linkage 60 are of a similar nature. The orientation control linkage 60 may be a rigid rod

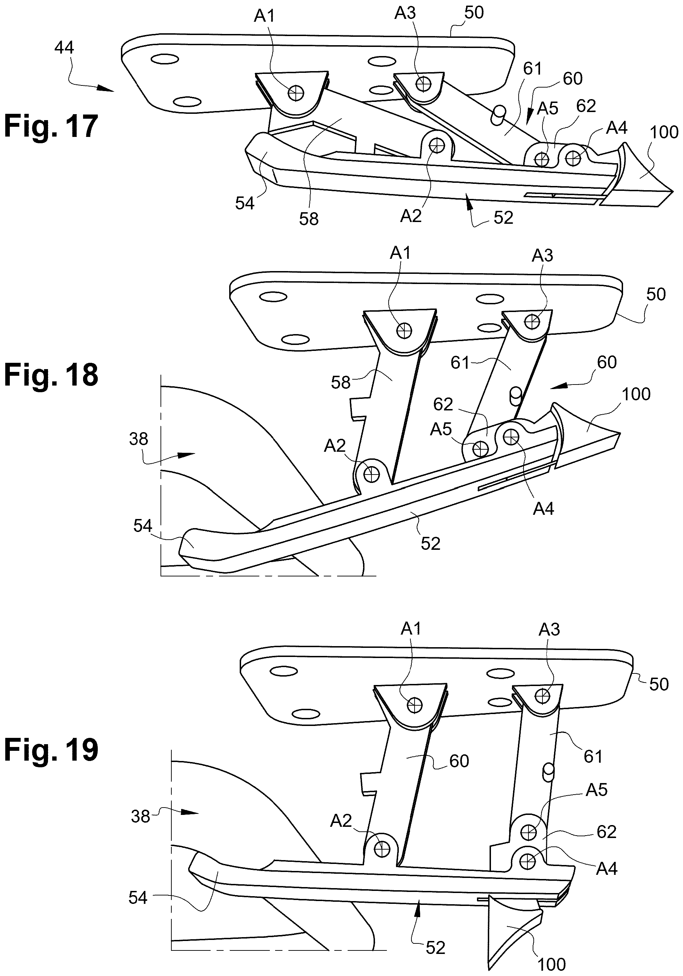

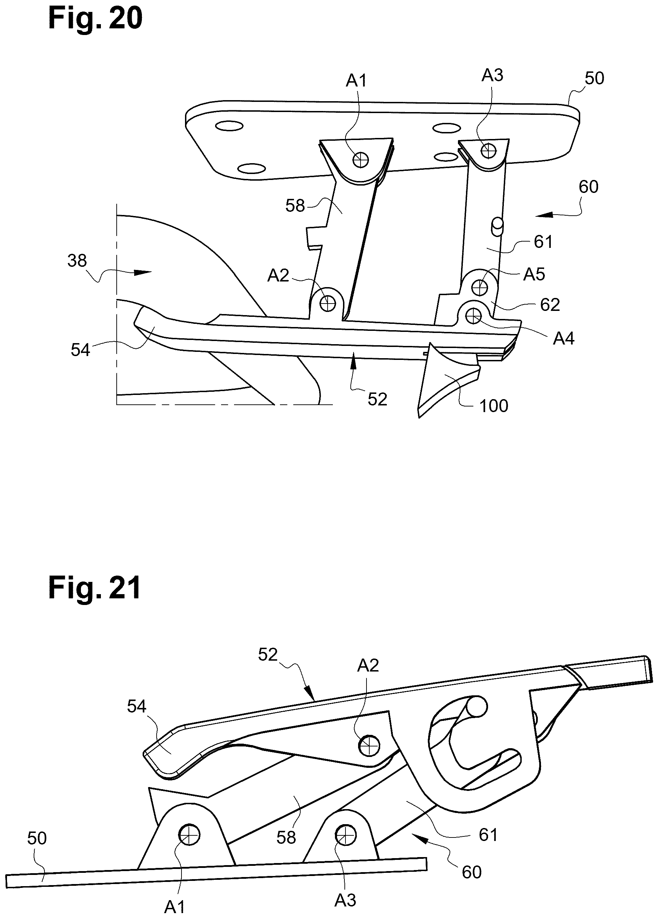

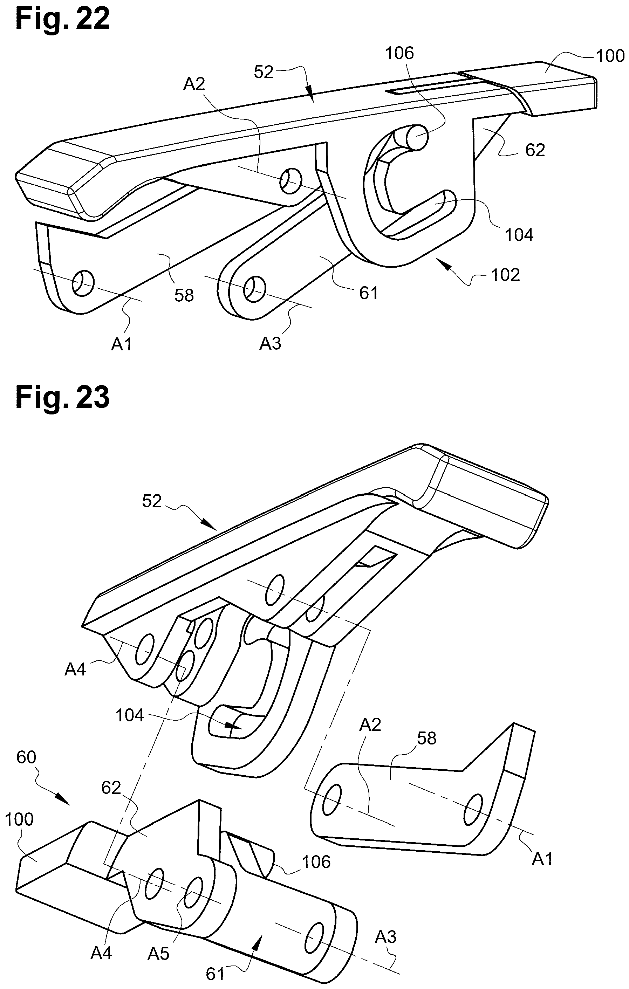

In some examples, including the example of Figures 17 to 20, and including the example of Figures 21 to 23, the articulated polygon formed by the base, the clasp 52, and the deployment linkage 56 is an articulated polygon comprising more than four sides, comprising for example 5 sides. In those examples, the orientation control link 60 has a collapsed configuration and a stretched configuration, wherein the distance between the third axis A3 and the fourth axis A4 is greater when the orientation control link 60 is in its stretched configuration than when it is in its collapsed configuration.

In some examples, including the example of Figures 17 to 20 and the example of Figures 21 to 23, the orientation control link 60 comprises two control rods including a first control rod 61 having a first extremity articulated on the base 50 around the third axis A3, and including a second control rod 62 articulated on the clasp assembly 52 around the fourth axis A4, wherein the two control rods 61, 62 are mutually articulated one to the other around a fifth axis A5 which is parallel to the third axis A3 and fourth axis A4. Preferably, the orientation control link 60 forms a toggle joint which can shift between the collapsed configuration and the stretched configuration.

In the depicted examples, the orientation controlling link 60 is located further away from the cabin abutment member 38, which is engaged by the catch 54 for latching the door 22, than the deployment rod. In such a case, the internal latch 44 is configured such that the orientation control link 60 switches to its stretched configuration during or after a terminal phase of the deployment movement of the clasp assembly 52 towards its deployed position, and the orientation control link 60 is locked into its stretched configuration when the clasp 54 is in the latching position. However, in a reversed construction, non-depicted, the orientation controlling link 60 could be located closer to the cabin abutment member 38 than the deployment rod 58. In such a case, the internal latch 44 would preferably be configured such that the orientation control link 60 switches to its collapsed configuration during or after a terminal phase of the deployment movement of the clasp assembly towards its deployed position, and the orientation control link would be locked into its collapsed configuration when the clasp 54 is in the latching position.

In the depicted examples, the orientation controlling link 60 shifts between its collapsed configuration and its stretched configuration by a relative rotation of its two control rods 61, 62 around the fifth axis A5. In the collapsed configuration, shown for example on Figure 18, the two control rods are 61, 62 are folded one towards the other around the fifth axis A5, thereby reducing the distance between the third axis A3 and the fourth axis A4. In the stretched configuration, shown for example on Figure 20, the two control rods are 61, 62 are unfolded one away from the other around the fifth axis A5, thereby increasing the distance between the third axis A3 in the fourth axis A4.

In the depicted examples, the two control rods 61, 62 of the orientation control link 60 lock into at least one position, here the stretched configuration, as in a toggle joint. Indeed, in the depicted example, when the catch 54 is in its latching position and the orientation control link 60 is in its stretched configuration, the orientation controlling link 60 being in this example further away from the cabin abutment member 38 than the deployment rod 58, the deployment rod 58 is subject to a traction force between the first axis A1 and the second axis A2, while of the orientation controlling link 60 is subject to a compression force between the third axis A3 and the fourth axis A4.

In the example of Figures 17 to 20, Figure 17 shows the internal latch 44 with the clasp 54 in the storage position. The clasp assembly 52 is in its retracted position and the deployment linkage 56 in its retracted configuration. In Figure 18, an intermediate configuration of the internal latch is shown where the deployment rod 58 has reached a final position, such that the second axis A2 has reached its most extended position towards the cabin abutment member 38. On the other hand, the orientation controlling link 60 is in a collapsed configuration. This collapsed configuration, corresponding to a relatively short distance between the third axis A3 in the fourth axis A4, corresponds to an orientation of the clasp assembly 52 where the clasp 54 is facing the cabin abutment member 38 without being in contact with the cabin abutment member 38.

From Figure 18 to Figure 20, the orientation controlling link 60 switches from the collapsed configuration of Figure 18 to its stretched configuration of Figure 20. During this movement, the distance between the third axis A3 and the fourth axis A4 increases, causing the clasp assembly 52 to pivot around the second axis A2 such that the clasp 54 comes into contact and presses against the cabin abutment member 38. On Figure 19 is shown an intermediate tipping configuration of the orientation controlling link 60, in which it exhibits its longest distance between third axis A3 and the fourth axis A4. In this intermediate tipping configuration, the two control rods 61, 62 of the orientation controlling link 60 are aligned, the third axis A3 the fourth axis A4 and the fifth axis A5 being co-planner. From the collapsed configuration of Figure 18 to the tipping configuration of Figure 19, the distance between third axis A3 and the fourth axis A4 increases to its maximum. From Figure 19 to Figure 20, the orientation controlling link 16 goes "over centre" and locks into the stretched configuration of Figure 20. Preferably, locking of the orientation controlling link 60 in this stretched configuration is obtained by at least one of the two control links 61, 62 abutting against another element of the internal latch 44, such as the other of the two control links 61, 62, the clasp assembly 52, and/or the base 50. This locking of the orientation controlling link 60 in the stretched configuration prevents any further relative rotation of the two control rods 61, 62 away from their aligned configuration in the intermediate tipping configuration of Figure 19. Preferably, the decrease of the distance between the third axis A3 and the fourth axis A4, between the tipping configuration of Figure 19 and the stretched configuration of Figure 20, is minimal enough so that the clasp 54 remains in contact with the cabin abutment member 38. Thus, some stress remains applied onto the orientation controlling link 60, maintaining it in its stretch configuration of Figure 20, as in a toggle joint.

In some examples, such as in the example of Figures 17 to 20, the switching of orientation controlling link 60 from the collapsed configuration of Figure 18 to its stretched configuration of Figure 20 is independent of the deployment movement. In the above example, the switching of the orientation controlling links 60 from the collapsed configuration to its stretched configuration is performed during or after a terminal phase of the deployment movement of the clasp assembly towards its deployed position. The switching of the orientation controlling link 60 from the collapsed configuration to it stretched configuration is for example controlled by a user of the internal latch 44 directly acting on the orientation controlling link 60. For example, as shown, the second control rod 62, which is articulated around the fourth axis A4 on the clasp assembly 52, may comprise an extension tab 100 which may be used by the user to force the orientation controlling link 60 to its stretched configuration.

In other examples, such as in the example of figures 21 to 23, the configuration of the orientation control link 60 is controlled by the deployment movement via a cam 102. The cam 102 may comprise a cam track 104 and a cam follower 106. In the example of figures 21 to 23, the cam track is arranged on the clasp assembly 52 and the cam follower is arranged on the first control rod 61. A reverse construction could be implemented with the cam track on the first control rod 61 and the cam follower on the clasp assembly 52. According to further designs, not depicted, one of a cam track and of a cam follower may arranged on the base 50 and the other of the of cam track and of the cam follower may arranged on the second control rod 62. Preferably, such a cam arrangement can define a single configuration for the articulated polygon, for each position of the deployment rod 58 around the first axis A1. In those embodiments where the configuration of the orientation controlling 60 is controlled by the deployment movement, the overall movement of the internal latch 44 may bring a facilitated use by the user. It may also provide a more robust feeling to the user, and may further avoid any faulty positioning of the internal latch in its latching configuration.

The disclosure includes the following examples.
Example 1: An internal latch (44) for internally latching a door (22) of a vehicle (10) with respect to a cabin abutment member (38) of the vehicle, comprising:
   - a base (50) which is configured for attachment to an internal side of the door (22);
   - a clasp assembly (52) comprising a clasp (54), where the clasp (54) exhibits, with respect to the base (50), a storage position and a latching position, and where the clasp assembly (52) is attached to the base (50) by a deployment linkage (56) allowing the clasp assembly (52) to deploy from a retracted position, when the clasp (54) is in the storage position, to a deployed position, when the clasp (54) is in the latching position, according to a deployment movement;
   wherein the base (50), the clasp assembly (52) and the deployment linkage (56) form an articulated polygon.
Example 2: The internal latch according to Example 1, wherein the deployment linkage (56) comprises a deployment rod (58) which is articulated on the base (50) around a first axis (A1), and articulated on the clasp assembly (52) around a second axis (A2), wherein the deployment linkage (56) further comprises an orientation control link (60) which is articulated on the base (50) around a third axis (A3), and articulated on the clasp assembly (52) around a fourth axis (A4),
   and wherein the first (A1), second (A2), third (A3) and fourth axis (A4) are parallel and distinct.
Example 3: The internal latch according to Example 2, wherein, in an intermediate outer position of the clasp assembly (52) between its retracted and its deployed positions, the second axis (A2) is further away from a base plane containing the first (A1) and third axis (A3) than in the retracted and in the deployed positions of the clasp assembly (52).
Example 4: The internal latch according to any of Examples 2 or 3, wherein the first, second, third and fourth axis (A1, A2, A3, A4) are perpendicular to a door opening direction (D).
Example 5: The internal latch according to any of Examples 2 to 4, wherein the clasp assembly (52) further comprises a clasp carrier (82), wherein the deployment rod (58) is articulated on the clasp carrier (82) around the second axis (A2), wherein the orientation control link (60) is articulated on the clasp carrier (82) around the fourth axis (A4), and wherein the clasp (54) is connected to the clasp carrier (82) by a slide (84) which allows a movement of the clasp (54) with respect to clasp carrier (82) from a shortened position to an extended position along a slide direction perpendicular to the second axis (A2).
Example 6: The internal latch according to Example 5, wherein the slide direction is perpendicular to a door opening movement (D) of the door (22) when it leaves its closed position towards its open position.
Example 7: The internal latch according to any of Examples 2 to 6, wherein the orientation control link (60) is rigid and wherein the distance between the third (A3) and the fourth axis (A4) is constant.
Example 8: The internal latch according to any preceding Example, wherein the base (50), the clasp assembly (52) and the deployment linkage (56) form an articulated parallelogram or quasi parallelogram.
Example 9: The internal latch according to any of Examples 2 to 6, wherein the orientation control link (60) has a collapsed configuration and a stretched configuration, wherein the distance between the third (A3) and the fourth axis (A4) is greater when the orientation control link (60) is in its stretched configuration than when it is in its collapsed configuration.
Example 10: The internal latch according to Example 9, wherein the internal latch (44) is configured such that the orientation control link (60) switches to its stretched configuration during or after a terminal phase of the deployment movement of the clasp assembly (52) towards its deployed position.
Example 11: The internal latch according to any of Examples 9 or 10, wherein the orientation control link (60) comprises two control rods including a first control rod (61) articulated on the base (50) around the third axis (A3), and including a second control rod (62) articulated on the clasp assembly (52) around the fourth axis (A4), wherein the two control rods (61, 62) are mutually articulated one to the other around a fifth axis (A5) which is parallel to the third (A3) and fourth axis (A4).
Example 12: The internal latch according to any of Examples 9 to 11, wherein the configuration of the orientation control link (60) is controlled by the deployment movement via a cam (102).
Example 13: The internal latch according to Example 12 in combination with Example 11, wherein the cam (102) comprises a cam track (104) and a cam follower (106), where one of the cam track (104) and of the cam follower (106) is arranged on the clasp assembly (52) and where the other of the of cam track and of the cam follower is arranged on the first control rod (61).
Example 14: The internal latch according to any preceding Example, wherein the clasp assembly (52) is biased in a bistable manner by a spring (70, 72), either towards the retracted or towards the deployed position from any position in-between, depending on the position of the clasp assembly (52) with respect to an intermediate switchover position between the retracted and the deployed positions.
Example 15: The internal latch according to any preceding claim, wherein the clasp assembly (52) is biased towards the base (50).
Example 16: The internal latch according to any preceding Example, wherein the base (50) has an outer side (49) for attachment to an internal side of the door (22), and wherein the clasp assembly (52) and the deployment linkage (56) are arranged on an inner side of the base, opposite to its outer side (49).
Example 17: A vehicle comprising the internal latch (44) according to any of preceding Examples.
Example 18. A vehicle according to Example 17, wherein the vehicle comprises a cabin (12) having a cabin body (13) and a door (22) mounted on the cabin body (13), the door (22) being moveable with respect to the cabin body (13) along a door opening movement (D) from a closed position to an open position, and wherein the internal latch (44) is mounted on the door (22) for latching the door (22) in its closed position with respect to the cabin (12).
Example 19: A vehicle according to Example 18, wherein the cabin body (13) comprises a cabin abutment member (38) which is rigid with the cabin body (13), and wherein the clasp (54), in its the latching position, engages the cabin abutment member (38) to latch the door (22) in its closed position with respect to the cabin (12).
Example 20: A vehicle according to Example 19, wherein the cabin abutment member (38) is located in an internal volume of the cabin (12) when the door (22) is closed.
Example 21: A vehicle according to any of Examples 19 or 20, wherein the cabin abutment member is a grab handle (38) arranged in the internal volume of the cabin (12) in the vicinity of the door (22).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An internal latch (44) for internally latching a door (22) of a vehicle (10) with respect to a cabin abutment member (38) of the vehicle, comprising:
- a base (50) which is configured for attachment to an internal side of the door (22);
- a clasp assembly (52) comprising a clasp (54), where the clasp (54) exhibits, with respect to the base (50), a storage position and a latching position, and where the clasp assembly (52) is attached to the base (50) by a deployment linkage (56) allowing the clasp assembly (52) to deploy from a retracted position, when the clasp (54) is in the storage position, to a deployed position, when the clasp (54) is in the latching position, according to a deployment movement;
wherein the base (50), the clasp assembly (52) and the deployment linkage (56) form an articulated polygon.

2. The internal latch according to claim 1, wherein the deployment linkage (56) comprises a deployment rod (58) which is articulated on the base (50) around a first axis (A1), and articulated on the clasp assembly (52) around a second axis (A2),
wherein the deployment linkage (56) further comprises an orientation control link (60) which is articulated on the base (50) around a third axis (A3), and articulated on the clasp assembly (52) around a fourth axis (A4),
and wherein the first (A1), second (A2), third (A3) and fourth axis (A4) are parallel and distinct.

3. The internal latch according to claim 2, wherein, in an intermediate outer position of the clasp assembly (52) between its retracted and its deployed positions, the second axis (A2) is further away from a base plane containing the first (A1) and third axis (A3) than in the retracted and in the deployed positions of the clasp assembly (52).

4. The internal latch according to any of claims 2 or 3, wherein the first, second, third and fourth axis (A1, A2, A3, A4) are perpendicular to a door opening direction (D).

5. The internal latch according to any of claims 2 to 4, wherein the clasp assembly (52) further comprises a clasp carrier (82), wherein the deployment rod (58) is articulated on the clasp carrier (82) around the second axis (A2), wherein the orientation control link (60) is articulated on the clasp carrier (82) around the fourth axis (A4), and wherein the clasp (54) is connected to the clasp carrier (82) by a slide (84) which allows a movement of the clasp (54) with respect to clasp carrier (82) from a shortened position to an extended position along a slide direction perpendicular to the second axis (A2).

6. The internal latch according to claim 5, wherein the slide direction is perpendicular to a door opening movement (D) of the door (22) when it leaves its closed position towards its open position.

7. The internal latch according to any of claims 2 to 6, wherein the orientation control link (60) is rigid and wherein the distance between the third (A3) and the fourth axis (A4) is constant.

8. The internal latch according to any preceding claim, wherein the base (50), the clasp assembly (52) and the deployment linkage (56) form an articulated parallelogram or quasi parallelogram.

9. The internal latch according to any of claims 2 to 6, wherein the orientation control link (60) has a collapsed configuration and a stretched configuration, wherein the distance between the third (A3) and the fourth axis (A4) is greater when the orientation control link (60) is in its stretched configuration than when it is in its collapsed configuration.

10. The internal latch according to claim 9, wherein the orientation control link (60) comprises two control rods including a first control rod (61) articulated on the base (50) around the third axis (A3), and including a second control rod (62) articulated on the clasp assembly (52) around the fourth axis (A4), wherein the two control rods (61, 62) are mutually articulated one to the other around a fifth axis (A5) which is parallel to the third (A3) and fourth axis (A4).

11. The internal latch according to any of claims 9 or 10, wherein the configuration of the orientation control link (60) is controlled by the deployment movement via a cam (102).

12. The internal latch according to claim 11 in combination with claim 10, wherein the cam (102) comprises a cam track (104) and a cam follower (106), where one of the cam track (104) and of the cam follower (106) is arranged on the clasp assembly (52) and where the other of the of cam track and of the cam follower is arranged on the first control rod (61).

13. The internal latch according to any preceding claim, wherein the clasp assembly (52) is biased in a bistable manner by a spring (70, 72), either towards the retracted or towards the deployed position from any position in-between, depending on the position of the clasp assembly (52) with respect to an intermediate switchover position between the retracted and the deployed positions.

14. The internal latch according to any preceding claim, wherein the base (50) has an outer side (49) for attachment to an internal side of the door (22), and wherein the clasp assembly (52) and the deployment linkage (56) are arranged on an inner side of the base, opposite to its outer side (49).

15. A vehicle comprising the internal latch (44) according to any of preceding claims.
